# EUROPEAN PATENT APPLICATION

(11) **EP 2 793 502 A1**
(43) Date of publication of application: **22.10.2014**
(21) Application number: 12860728.0
(22) Date of filing: 09.10.2012
(51) Int. Cl.: H04W 24/04, H04W 92/10

(54) **METHOD AND USER EQUIPMENT FOR MAINTAINING SMALL BASE STATION BASED ON AIR INTERFACE OF SMALL BASE STATION**

(30) Priority: 21.12.2011 CN 201110432997
(71) Applicant: Huawei Technologies Co., Ltd., Shenzhen, Guangdong 518129 (CN)
(72) Inventor: ZHANG, Yong, Shenzhen, Guangdong 518129 (CN); ZHU, Wei, Shenzhen, Guangdong 518129 (CN); HU, Guojie, Shenzhen, Guangdong 518129 (CN)
(74) Representative: Maiwald Patentanwalts GmbH
(86) International application number: PCT/CN2012/082634
(87) International publication number: WO 2013/091430

(57) **Abstract**

In a method for performing maintenance based on an air interface of a small base station provided by the present invention, a user equipment establishes an air interface link with a small base station, and receives maintenance information sent by the small base station; and then the user equipment maintains the small base station through an air interface according to the maintenance information. In the technical solutions provided in the present invention, the small base station can be simply and easily maintained.

## Description

### TECHNICAL FIELD

This present invention relates to the field of communications technologies, and in particular, to a method and user equipment for performing maintenance based on an air interface of a small base station.

### BACKGROUND

A small base station is also known as a Femtocell, a palm-sized base station, a home base station, a SOHO base station, or the like. The small base station is a low-power transmitting apparatus, generally designed for use at home or in small- and medium-sized enterprises. The small base station has automatic configuration and optimization functions, neither requiring additional planning by an operator enterprise or a user nor requiring intervention and installation by the user, and is also free from a technical problem such as site selection. Therefore, the small base station can not only serve as an extension of a mobile network and a means of increasing a network capacity, but also be an effective solution to implement convergence of a fixed network and a mobile network.

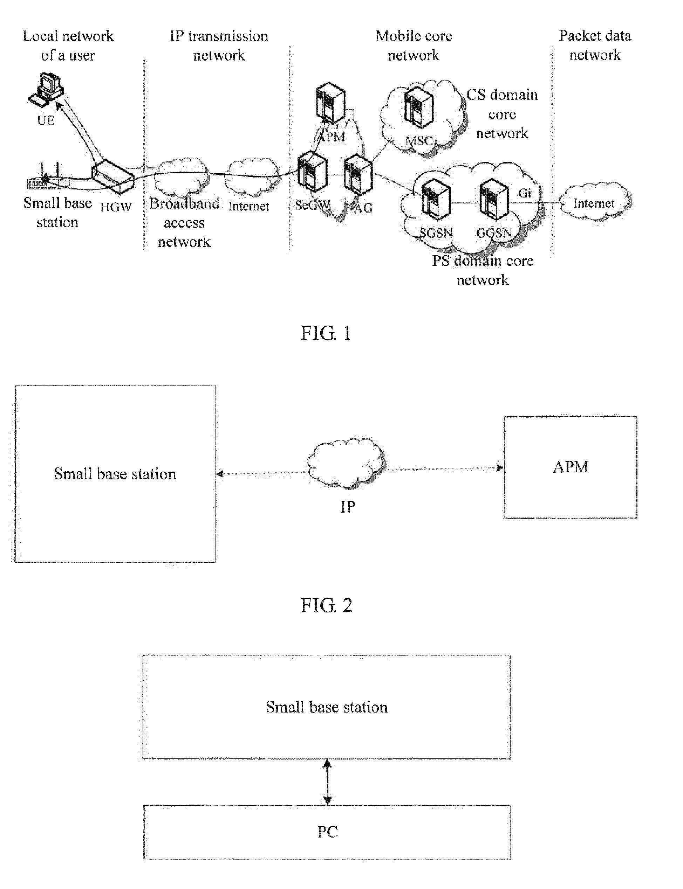

As shown in FIG. 1, networking of a small base station is: A UE (User Equipment, user equipment) gains access to the small base station by using an air interface; the small base station gains access to an IP transmission network (the small base station can integrate a function of an HGW (Home gateway, home gateway) and directly gain access to the IP transmission network) by using an HGW, then gains access to a SeGW (Security Gateway, security gateway) of a mobile core network by using the IP transmission network, and further gains access to an AG (Access Gateway, access gateway, an access gateway can integrate a function of the SeGW). Then, the AG gains access to a core network of a CS (Circuit Switched, circuit switched) domain and a core network of a PS (Packet Switched, packet switched) domain. Systems of the small base station and the AG are not limited to a UMTS, a GSM, a CDMA, or the like.

### SUMMARY

One aspect of the present invention provides a method for performing maintenance based on an air interface of a small base station, so as to perform simple and easy maintenance on the small base station, where the method includes:
establishing, by a user equipment UE, an air interface link with a small base station, and receiving, through an air interface, maintenance information sent by the small base station; and
maintaining, by the UE, the small base station through the air interface according to the maintenance information.

Another aspect of the present invention further provides a user equipment, including:
a link establishing unit, configured to establish an air interface link with a small base station;
a receiving unit, configured to receive maintenance information sent by the small base station; and
a maintaining unit, configured to maintain the small base station through an air interface according to the maintenance information.

Another aspect of the present invention further provides a small base station, including:
a link establishing unit, configured to establish an air interface link with a UE; and
a sending unit, configured to send maintenance information to the UE through an air interface, so that the UE maintains the small base station through the air interface according to the maintenance information.

In the method for performing maintenance based on an air interface of a small base station provided by the present invention, a user equipment establishes an air interface link with a small base station and receives maintenance information sent by the small base station, and then the user equipment maintains the small base station through an air interface according to the maintenance information. In the technical solutions provided in the present invention, maintenance on the small base station can be simply and easily implemented.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a networking diagram of a small base station in the prior art;
FIG. 2 is a schematic diagram of performing far-end maintenance on a small base station in the prior art;
FIG. 3 is a schematic diagram of performing near-end maintenance on a small base station in the prior art;
FIG. 4 is a schematic diagram of a disconnected wired link between a small base station and a network side according to an embodiment of the present invention;
FIG. 5 is a flowchart of a method for performing maintenance based on an air interface of a small base station according to an embodiment of the present invention;
FIG. 6 is a schematic diagram of a normal wired link between a small base station and a network side according to an embodiment of the present invention;
FIG. 7 is a flowchart of a method for performing maintenance based on an air interface of a small base station according to an embodiment of the present invention;
FIG. 8 is a schematic structural diagram of a user equipment according to an embodiment of the present invention;
FIG. 9 is a schematic structural diagram of a small base station according to an embodiment of the present invention;
FIG. 10 is a schematic structural diagram of a small base station according to an embodiment of the present invention; and
FIG. 11 is a schematic structural diagram of a small base station according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Terms "system" and "network" may be used interchangeably in this specification. The term "and/or" in this specification describes only an association relationship between objects and indicates that three relationships may exist, for example, A and/or B may indicate the following three cases: A exists alone, both A and B exist, and B exists alone. In addition, the character "/" in the specification generally indicates that associated objects are in an "for" relationship.

At present, there are mainly two types of maintenance on a small base station:

One is far-end maintenance: As shown in FIG. 2, the far-end maintenance is to establish a wired link between a small base station and a network management system, and then maintain the small base station, such as configuring data and viewing status, by using the network management system in an equipment room. A disadvantage of the far-end maintenance lies in that when the wired link between the small base station and the network management system is disconnected, maintenance cannot be performed.

The other is near-end maintenance. As shown in FIG. 3, the near-end maintenance is to implement a local connection between a small base station and a PC (Personal Computer, personal computer) device, and then maintain the small base station locally. A disadvantage of the near-end maintenance lies in that it is inconvenient to carry the PC device, and in some places, the local connection cannot be implemented between the small base station and the PC device, bringing difficulty in maintenance of the small base station. In addition, the near-end maintenance sometimes requires far-end cooperation, which also brings trouble and inconvenience in maintenance work.

To solve the foregoing problems in the prior art, the embodiments of the present invention provide a method for performing maintenance based on an air interface of a small base station, including:
establishing, by a UE, an air interface link with a small base station, and receiving, through an air interface, maintenance information sent by the small base station; and
maintaining, by the UE, the small base station through the air interface according to the maintenance information.

The following further describes the foregoing methods with reference to the accompanying drawings.

### Embodiment 1

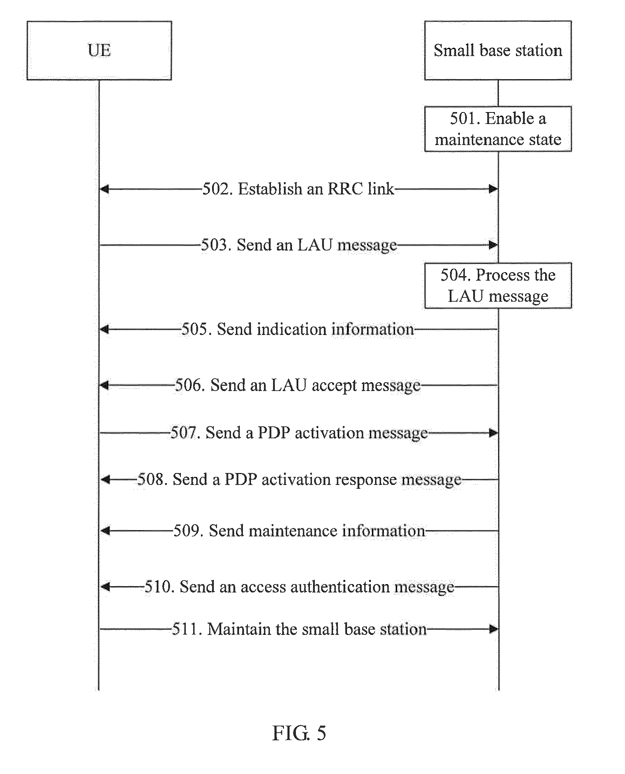

As shown in FIG. 5, Embodiment 1 provides a method for performing maintenance based on an air interface of a small base station, including:

Step 501: when detecting that a wired link with a network side is disconnected, a small base station enables a maintenance state and provides an air interface.

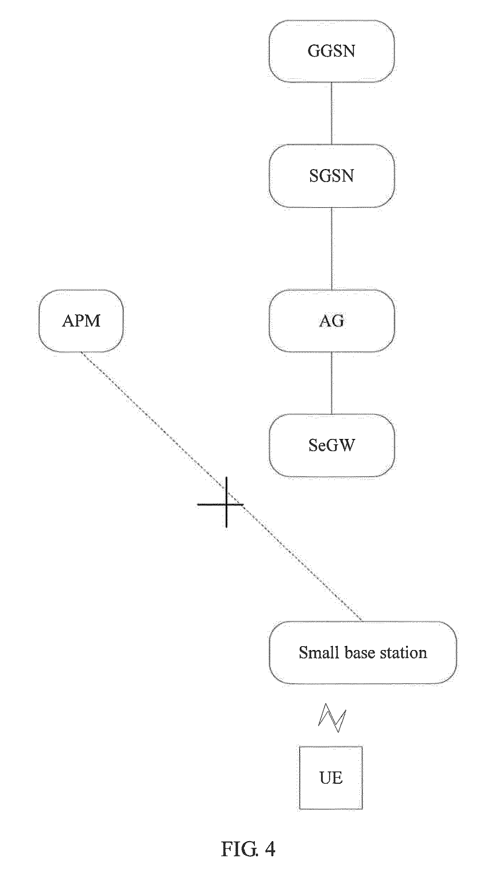

As shown in FIG. 4, a SeGW, an AG, an SGSN (Serving GPRS Support Node, serving GPRS support node), and a GGSN (Gateway GPRS Support Node, gateway GPRS support node) belong to a core network part; and an APM is a network management system. When detecting that the wired link with the network side is disconnected, the small base station enables the maintenance state and provides the air interface, so that the UE can maintain the small base station through the air interface.

After the small base station enables the maintenance state, if a user camps, the user may be notified by means of a short message or a flash short message that the small base station is in the maintenance state and does not provide a normal service.

The small base station in this embodiment includes but is not limited to:
a Femto base station, a Pico base station, an ePico base station, and a Micro base station.

The Femto base station, also known as a Femtocell, is a type of subminiaturized mobile base station developed according to development of 3G and a trend of mobile broadband in recent years. The Femtocell uses an IP protocol and is connected through an existing household broadband circuit of a user, and at a far end, a connection from an IP network to a mobile network is implemented by using a dedicated gateway. With a size similar to that of a household modem, the Femtocell is characterized in easy installation, automatic configuration, automatic network planning, and plug and play.

The Pico base station, also known as a Picocell, communicates with an RNC (Radio Network Controller, radio network controller) through a standard Iub interface, and can provide standard 3G services such as voice, video, and high-speed data. With a small size and a light weight, the Picocell is easy to carry, supports a plurality of installation manners, such as wall-mounting, hanging, and desktop installation, and supports all-IP transmission, thereby making good use of an IP transmission network to implement rapid network construction at a low cost. The Pico base station can be co-planned and share a PNC and a network management platform with a macro base station, and be blended seamlessly with an existing network, thereby improving performance of the whole network and user experience.

The ePico base station is similar to the Pico base station in terms of a physical form and specifications, and different from the Pico base station only in a network architecture. The ePico base station supports a flat network architecture without a controller while the Pico base station is a conventional network architecture.

The Micro base station, also known as a Microcell, is a type of base station developed on a basis of a macro cellular base station, and has a relatively low transmit power and a relatively small coverage radius. The Micro base station can not only cover a blind spot of coverage of a macro cell, thereby increasing a coverage rate, but also can increase a network capacity to form a multi-layer network along with the macro cell.

Step 502: After the small base station enables the maintenance state, a UE establishes an RRC (Radio Resource Control, Radio Resource Control protocol) link with the small base station by using a standard procedure.

Step 503: The UE send an LAU (Location Area Update, location area update) message to the small base station.

Step 504: The small base station processes the LAU message after receiving the LAU message sent by the UE.

A NAS (Non-Access Stratum, non-access stratum) module processes the LAU message. The NAS module may be located in a core network, or may be integrated into the small base station. The NAS module in this embodiment is located in the small base station.

The NAS module processes information transmission between the UE and the core network, and transmission content may be user information or control information (such as information about service establishment and release, or mobility management). The NAS is independent of a AS protocol structure below to some extent and is irrelevant to a radio access network (which may be a GSM, a GPRS, or a WCDMA).

Step 505: The small base station sends indication information to the UE.

The indication information includes status information of the current small base station, for example, whether the small base station is in a maintenance state or a working state, and description information about a maintenance method, for example, an operation guide to maintenance of the small base station.

Step 506: The small base station sends an LAU accept message to the UE.

A sequence of step 506 and step 505 is not fixed. The small base station may first send the LAU accept message to the UE and then send the indication information to the UE; the small base station may also first send the indication information to the UE and then send the LAU accept message to the UE; or the small base station may also send the LAU accept message and the indication information to the UE concurrently.

Step 507: The UE sends a PDP (Packet Date Protocol, Packet Data Protocol) activation message to the small base station.

Step 508: The small base station assigns an IP address to the UE after receiving the PDP activation message sent by the UE.

The small base station forwards the received PDP activation message to the NAS module, and the NAS module requests an AS (Application Server, application server) module for an IP address of the UE. The AS module returns the IP address to the NAS module, and the NAS module sends a PDP activation response message to the small base station, where the PDP activation response message includes the IP address of the UE. The small base station forwards the PDP activation response information to the UE, and the UE, after receiving the PDP activation response information, acquires the IP address. So far, an air interface link has been established between the UE and the small base station.

The AS module may be located in a core network, or may be integrated into the small base station. In this embodiment, the AS module is located in the small base station.

Step 509: After the air interface link has been established between the UE and the small base station, the UE receives maintenance information sent by the small base station.

That the UE receives maintenance information sent by the small base station may be that the small base station actively sends the maintenance information to the UE, or the UE acquires the maintenance information after sending a request message to the small base station. The maintenance information includes maintenance software, where the maintenance software can perform parameter configuration and fault locating for the small base station.

Step 510: The small base station performs access authentication on the UE.

The small base station may perform access authentication on the UE by means of sending an access authentication message. The UE can maintain the small base station through the air interface according to the maintenance information only after the authentication succeeds.

An objective of step 510 is to ensure that only a specific authenticated UE can maintain the small base station, so as to prevent access by an irrelevant user equipment.

Step 511: The UE maintains the small base station through the air interface according to the maintenance information sent by the small base station.

For example, the UE may download from the small base station or view online a log of the small base station, modify a configuration parameter of the small base station, control the small base station by sending an instruction, and so on, and perform any one or more of the foregoing operations according to a fault cause of the small base station.

Step 512: After the wired link between the small base station and the network management system is recovered, the small base station notifies the UE of stopping maintenance and switches from the maintenance state to the working state.

In the method for performing maintenance based on an air interface of a small base station provided in this embodiment, the small base station can be simply and easily maintained, thereby reducing a maintenance difficulty and cost of the small base station.

### Embodiment 2

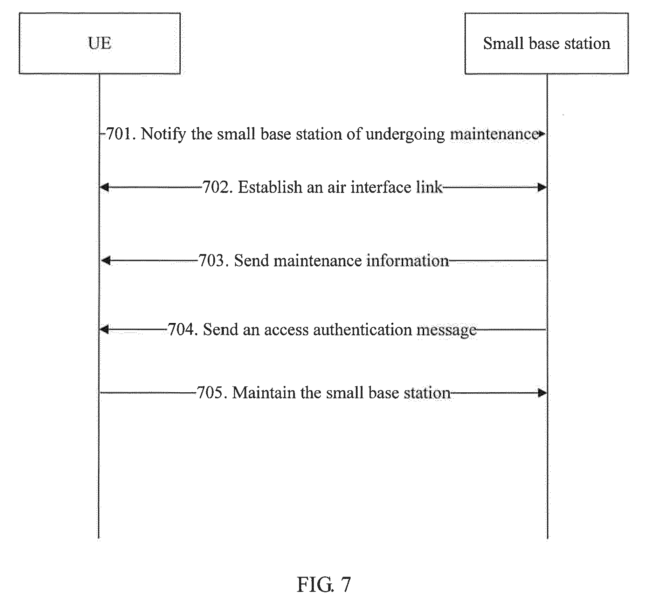

As shown in FIG. 7, an embodiment of the present invention further provides a method for performing maintenance based on an air interface of a small base station, including:

Step 701: When a wired link between a small base station and a network side is normal, a UE notifies the small base station that the UE will maintain the small base station;

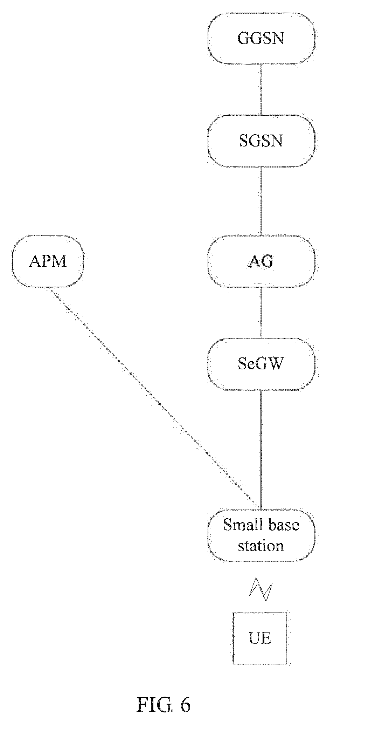

As shown in FIG. 6, a SeGW, an AG, an SGSN, and a GGSN belong to a core network part, and an APM is a network management system. When the wired link between the network side and the small base station is normal, but the UE considers that it is necessary to maintain the small base station, the UE may notify the small base station of undergoing maintenance.

A manner in which the UE notifies the small base station of undergoing maintenance includes but is not limited to the following two types:

One is that the UE dials a particular number and controls, by using the number of dialing times, the small base station to enable or disable a maintenance state. After receiving a call, the small base station parses a called number of the call. If the called number is the particular number, the small base station controls switching of the maintenance state of the small base station as follows: The maintenance state of the small base station is disabled by default, the maintenance state is enabled when the UE dials the particular number for the first time, and the maintenance state is disabled at the second time of dialing, which is derived by analog.

The other is that the UE sends a short message to a particular number and controls, by using an instruction carried in the short message, the small base station to enable or disable the maintenance state. After receiving the short message, the small base station parses a destination number of the short message. If the destination number is the particular number, the small base station then parses content of the short message and, according to the instruction carried in the short message, enables or disables the maintenance state.

The particular number is a preset number such as "123#". After receiving a call or a short message, where the call or the short message is initiated by the particular number, the small base station enables and disables the maintenance state.

Step 702: The UE establishes an air interface link with the small base station.

Step 703: The UE receives maintenance information sent by the small base station.

That the UE receives maintenance information sent by the small base station may be that the small base station actively sends the maintenance information to the UE, or the UE acquires the maintenance information after sending a request message to the small base station. The maintenance information includes maintenance software, where the maintenance software can perform parameter configuration and fault locating for the small base station.

Step 704: The small base station performs access authentication on the UE.

The small base station may perform access authentication on the UE by means of sending an access authentication message. The UE can maintain the small base station through the air interface according to the maintenance information only after the authentication succeeds.

An objective of step 704 is to ensure that only a specific authenticated UE can maintain the small base station, so as to prevent access by an irrelevant user equipment.

Step 705: The UE maintains the small base station through the air interface according to the maintenance information sent by the small base station.

For example, the UE may download from the small base station or view online a log of the small base station, modify a configuration parameter of the small base station, control the small base station by sending an instruction, and so on, and perform any one or more of the foregoing operations according to a fault cause of the small base station.

In the method for performing maintenance based on an air interface of a small base station provided in this embodiment, the small base station can be simply and easily maintained, thereby reducing a maintenance difficulty and cost of the small base station.

### Embodiment 3

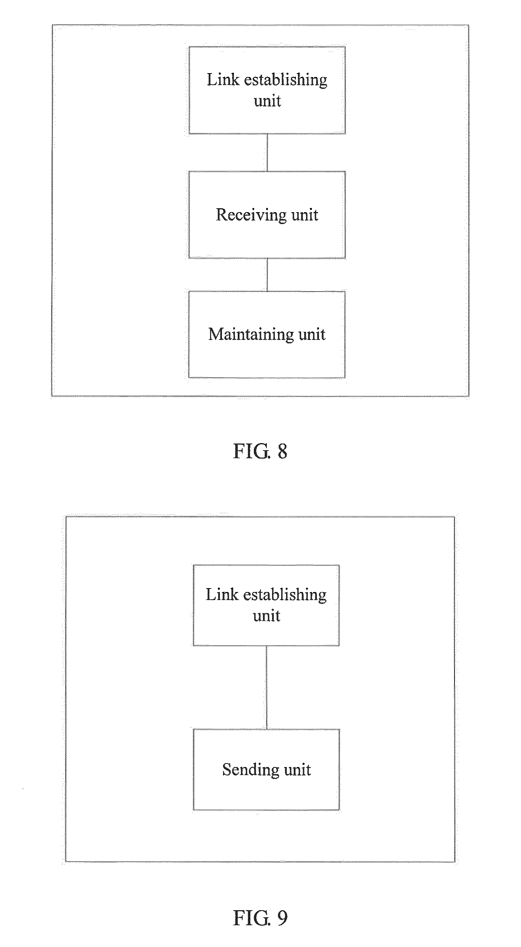

As shown in FIG. 8, an embodiment of the present invention further provides a user equipment for performing maintenance based on an air interface of a small base station, including:
a link establishing unit, configured to establish an air interface link with a small base station;
a receiving unit, configured to receive maintenance information sent by the small base station; and
a maintaining unit, configured to maintain the small base station through an air interface according to the maintenance information.

### Embodiment 4

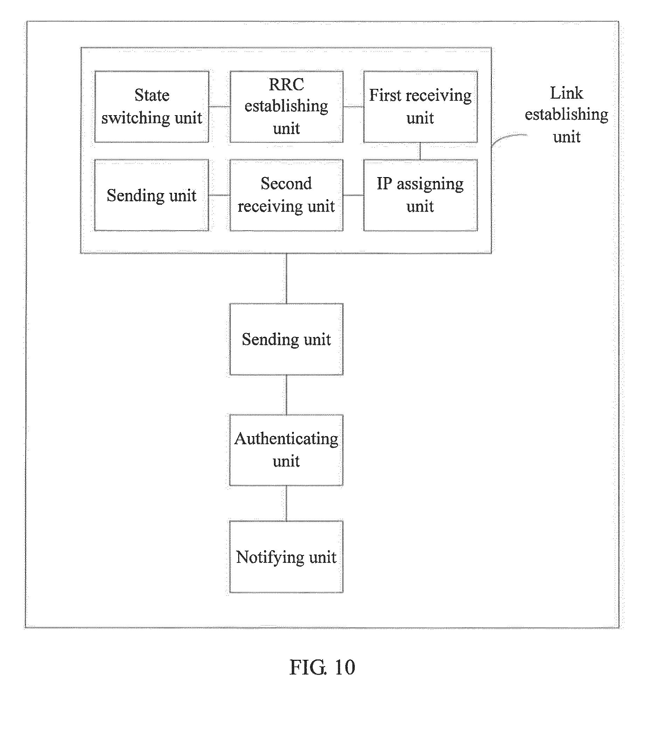

As shown in FIG. 9 and FIG. 10, an embodiment of the present invention further provides a small base station, including:
a link establishing unit, configured to establish an air interface link with a UE;
a sending unit, configured to send maintenance information to the UE through an air interface, so that the UE maintains the small base station through the air interface according to the maintenance information;
an authenticating unit, configured to perform access authentication on the UE, so that the small base station allows an authenticated UE to maintain the small base station; and
a notifying unit, configured to notify, after a wired link between the small base station and a network management system is recovered, the UE of stopping maintenance.

The link establishing unit further includes:
a state switching unit, configured to switch between a maintenance state and a working state; and when the small base station enables the maintenance state, allow the UE to maintain the small base station through the air interface;
an RRC establishing unit, configured to establish a Radio Resource Control protocol RRC link with the UE;
a first receiving unit, configured to receive an LAU message sent by the UE;
a sending unit, configured to send an LAU accept message and indication information to the UE, where the indication information includes status information of the current small base station and description information about a maintenance method;
a second receiving unit, configured to receive a PDP activation message sent by the UE; and
an IP assigning unit, configured to assign an IP address to the UE.

### Embodiment 5

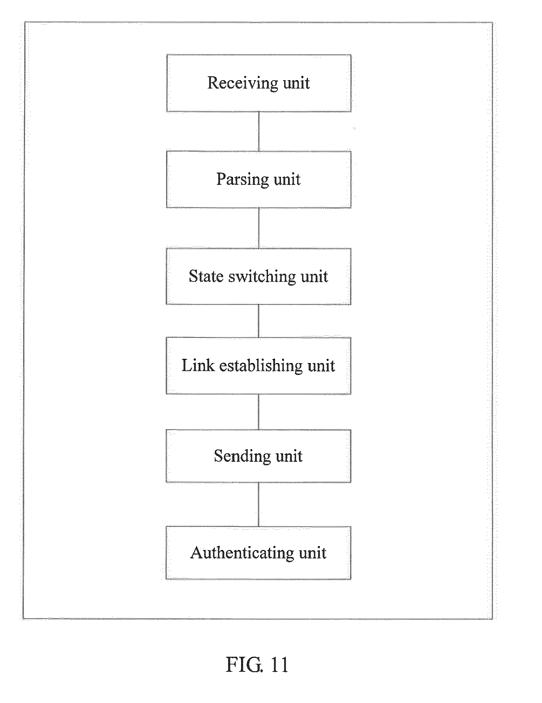

As shown in FIG. 11, an embodiment of the present invention further provides a small base station, including:
a receiving unit, configured to receive a call or a short message, where the call or the short message is sent by a UE;
a parsing unit, configured to parse a destination number of the call or of the short message, and also configured to parse content of the short message;
a state switching unit, configured to switch between a maintenance state and a working state; and when the small base station enables the maintenance state, allow the UE to maintain the small base station through an air interface;
a link establishing unit, configured to establish an air interface link with the UE;
a sending unit, configured to send maintenance information to the UE through the air interface, so that the UE maintains the small base station through the air interface according to the maintenance information; and
an authenticating unit, configured to perform access authentication on the UE, so that the small base station allows only an authenticated UE to maintain the small base station.

A person skilled in the art may clearly understand that, for the purpose of convenient and brief description, for a detailed working process of the foregoing system, apparatus, and unit, reference may be made to a corresponding process in the foregoing method embodiments, and details are not repeatedly described herein.

In the several embodiments provided in the present invention, it should be understood that the disclosed system, apparatus, and method may be implemented in other manners. For example, the described apparatus embodiment is merely exemplary. For example, dividing of the units is merely a type of logical function dividing, and there may be other dividing manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing description is merely exemplary implementation manners of the present invention for a person skilled in the art to understand or implement the present invention. Various modifications of the embodiments are apparent to a person of ordinary skill in the art, and general principles defined in the specification may be implemented in other embodiments without departing from the spirit or scope of the present invention. Therefore, the present invention is not limited to the embodiments described in this specification, but extends to the widest scope that complies with the principle and novelty disclosed in the document.

## Claims

1. A method for performing maintenance based on an air interface of a small base station, comprising:
establishing, by a user equipment UE, an air interface link with a small base station, and receiving, through an air interface, maintenance information sent by the small base station; and
maintaining, by the UE, the small base station through the air interface according to the maintenance information.

2. The method according to claim 1, before the method, further comprising:
when a wired link between the small base station and a network management system is disconnected, enabling, by the small base station, a maintenance state and allowing the UE to maintain the small base station through the air interface.

3. The method according to claim 2, wherein the establishing, by a user equipment UE, an air interface link with a small base station is specifically:
establishing, by the UE, a Radio Resource Control protocol RRC link with the small base station and sending a location area update LAU message to the small base station;
receiving, by the UE, an LAU accept message and indication information that are sent by the small base station, wherein the indication information comprises current status information of the small base station and description information about a maintenance method; and
sending, by the UE, a Packet Data Protocol PDP activation message to the small base station and receiving a PDP activation response message sent by the small base station, wherein the PDP activation response message comprises an IP address assigned by the small base station to the UE; and after the UE acquires the IP address, the air interface link has been established with the small base station.

4. The method according to claim 2, after the method, further comprising:
receiving, by the UE after the wired link between the small base station and the network management system is recovered, a notification message sent by the small base station and stopping maintenance.

5. The method according to claim 1, before the method, further comprising:
when a wired link between the small base station and a network management system is normal, controlling, by the UE by dialing a preset particular number or sending a short message to the particular number, the small base station to enable or disable a maintenance state.

6. The method according to claim 5, wherein the controlling, by the UE by dialing a preset particular number or sending a short message to the particular number, the small base station to enable or disable a maintenance state specifically comprises:
when the UE dials the particular number, controlling, by using the number of dialing times, the small base station to enable or disable the maintenance state, wherein the maintenance state of the small base station is disabled by default, the maintenance state is enabled when the UE dials the particular number for the first time, and the maintenance state is disabled at the second time of dialing; and
when the UE sends the short message to the particular number, controlling, by using an instruction carried in the short message, the small base station to enable or disable the maintenance state, wherein the small base station parses content of the short message, and, according to the instruction, enables or disables the maintenance state.

7. The method according to claim 1, wherein the receiving, by the UE, maintenance information sent by the small base station is specifically: receiving, by the UE, the maintenance information that is actively sent by the small base station, or receiving, by the UE after sending a request message to the small base station, the maintenance information sent by the small base station.

8. The method according to claim 1, wherein the maintenance information comprises maintenance software, and the maintenance software is used to perform parameter configuration and fault locating for the small base station.

9. The method according to claim 1, after the receiving, by the UE, maintenance information sent by the small base station, further comprising:
receiving, by the UE, an access authentication message sent by the small base station, and after authentication succeeds, maintaining the small base station through the air interface according to the maintenance information.

10. The method according to claim 1, wherein the maintaining, by the UE, the small base station through the air interface according to the maintenance information is specifically:
performing, by the UE, any one or more of the following operations:
downloading or viewing online a log of the small base station, modifying a configuration parameter of the small base station, and controlling the small base station by sending an instruction.

11. A method for performing maintenance based on an air interface of a small base station, comprising:
establishing, by a small base station, an air interface link with a user equipment UE, and sending maintenance information to the UE through the air interface, so that the UE maintains the small base station through the air interface according to the maintenance information.

12. The method according to claim 11, before the method, further comprising:
when a wired link between the small base station and a network management system is disconnected, enabling, by the small base station, a maintenance state and allowing the UE to maintain the small base station through the air interface.

13. The method according to claim 12, wherein the establishing, by a small base station, an air interface link with a UE is specifically:
establishing, by the small base station, a Radio Resource Control protocol RRC link with the UE and receiving a location area update LAU message sent by the UE;
sending, by the small base station, an LAU accept message and indication information to the UE, wherein the indication information comprises current status information of the small base station and description information about a maintenance method;
receiving, by the small base station, a Packet Data Protocol PDP activation message sent by the UE, and sending a PDP activation response message to the UE, wherein the PDP activation response message comprises an IP address assigned by the small base station to the UE; and
establishing, by the small base station, the air interface link with the UE.

14. The method according to claim 12, after the method, further comprising:
instructing, by the small base station after the wired link between the small base station and a network management system is recovered, the UE to stop maintenance, and switch from the maintenance state to a working state.

15. The method according to claim 11, before the method, further comprising:
receiving, by the small base station when a wired link between the small base station and a network management system is normal, a call made by the UE, and parsing a destination number of the call; and if the destination number is a preset particular number, enabling, by the small base station, a maintenance state; wherein
the maintenance state of the small base station is disabled by default, the maintenance state is enabled when the first call of the UE is received, and the maintenance state is disabled when the second call of the UE is received; or
receiving, by the small base station, a short message sent by the UE and parsing a destination number of the short message; and if the destination number is a preset particular number, parsing content of the short message, and, according to an instruction comprised in the content of the short message, enabling or disabling a maintenance state.

16. A user equipment UE for performing maintenance based on an air interface of a small base station, comprising:
a link establishing unit, configured to establish an air interface link with a small base station;
a receiving unit, configured to receive maintenance information sent by the small base station; and
a maintaining unit, configured to maintain the small base station through an air interface according to the maintenance information.

17. A small base station, comprising:
a link establishing unit, configured to establish an air interface link with a UE; and
a sending unit, configured to send maintenance information to the UE through an air interface, so that the UE maintains the small base station through the air interface according to the maintenance information.

18. The small base station according to claim 17, wherein the link establishing unit further comprises:
a state switching unit, configured to switch between a maintenance state and a working state; and when the small base station enables the maintenance state, allow the UE to maintain the small base station through the air interface;
an RRC establishing unit, configured to establish a Radio Resource Control protocol RRC link with the UE;
a first receiving unit, configured to receive an LAU message sent by the UE;
a sending unit, configured to send an LAU accept message and indication information to the UE, wherein the indication information comprises status information of the current small base station and description information about a maintenance method;
a second receiving unit, configured to receive a PDP activation message sent by the UE; and
an IP assigning unit, configured to assign an IP address to the UE.

19. The small base station according to claim 17, wherein the small base station further comprises:
an authenticating unit, configured to perform access authentication on the UE, so that the small base station allows an authenticated UE to maintain the small base station; and
a notifying unit, configured to notify, after a wired link between the small base station and a network management system is recovered, the UE of stopping maintenance.

20. The small base station according to claim 17, further comprising:
a receiving unit, configured to receive a call or a short message, wherein the call or the short message is sent by the UE;
a parsing unit, configured to parse a destination number of the call or of the short message, and also configured to parse content of the short message;
a state switching unit, configured to switch between a maintenance state and a working state; and when the small base station enables the maintenance state, allow the UE to maintain the small base station through the air interface; and
an authenticating unit, configured to perform access authentication on the UE, so that the small base station allows only an authenticated UE to maintain the small base station.
